# EUROPEAN PATENT APPLICATION

(11) **EP 4 321 283 A1**
(43) Date of publication of application: **14.02.2024**
(21) Application number: 22784395.0
(22) Date of filing: 07.03.2022
(51) Int. Cl.: B22F 10/85, B22F 10/28, B22F 12/37, B22F 12/90, B29C 64/153, B29C 64/393, B33Y 10/00, B33Y 30/00, B33Y 50/02

(54) **ROTATING ADDITIVE MANUFACTURING DEVICE AND CONTROL DEVICE**

(30) Priority: 05.04.2021 JP 2021064046
(71) Applicant: IHI Corporation, Tokyo 135-8710 (JP)
(72) Inventor: SHIONUMA, Kenta, Tokyo 135-8710 (JP); NAKAYAMA, Yuichiro, Tokyo 135-8710 (JP)
(74) Representative: MERH-IP Matias Erny Reichl Hoffmann Patentanwälte PartG mbB
(86) International application number: PCT/JP2022/009785
(87) International publication number: WO 2022/215410

(57) **Abstract**

A rotating additive manufacturing device includes a table, a feeder, a heater, a beam source, a state information acquisition unit, and a control unit. The control unit has a stop operation unit outputting a first control signal for stopping irradiation with an electron beam due to an input of abnormal state information, and a return operation unit determining whether or not the abnormal state information is information related to a state of a powder material and outputting a second control signal for controlling at least one of rotating operation of the table, heating operation of the heater, and supplying operation of the feeder when the abnormal state information is information related to the state of the powder material.

## Description

### Technical Field

The present disclosure relates to a rotating additive manufacturing device and a control device.

### Background Art

Patent Literature 1 discloses a three-dimensional object producing device, in which temperature change in a powder layer during production affects quality of a product. Further, the producing device of Patent Literature 1 selects an area in the powder layer and designs an operation plan to maintain a temperature of the selected area.

Patent Literature 2 discloses a three-dimensional manufacturing device. The three-dimensional manufacturing device of Patent Literature 2 temporarily stops operation of manufacturing a three-dimensional object and then restarts the operation of manufacturing a three-dimensional object. More specifically, the three-dimensional manufacturing device of Patent Literature 2 controls discharging of a binder on the basis of a situation after operation has been temporarily stopped.

### Citation List

### Patent Literature

[Patent Literature 1] Japanese Patent No. 4639087
[Patent Literature 2] Japanese Unexamined Patent Publication No. 2017-119350

### Summary of Invention

### Technical Problem

Manufacturing quality of a component manufactured by a rotating additive manufacturing device is diversely affected during manufacturing operation. For example, manufacturing quality is affected by a temperature distribution of a powder material. Manufacturing quality is also affected by a state on a surface of a powder material irradiated with an energy beam. In order to obtain desired manufacturing quality, there is a need to maintain a powder material in a predetermined state. However, during the manufacturing operation, a situation where the manufacturing operation should not be continued may also arise for some reason. In a situation where the manufacturing operation should not be continued, it is difficult to maintain a state where desired manufacturing quality can be obtained. As a result, it is difficult to obtain a manufacturing object satisfying desired manufacturing quality.

The present disclosure describes a rotating additive manufacturing device and a control device of a rotating additive manufacturing device capable of obtaining a manufacturing object satisfying desired manufacturing quality.

### Solution to Problem

A rotating additive manufacturing device according to an aspect of the present disclosure includes a table rotatively supporting a powder material, a supply unit supplying the powder material to the table, a heating unit heating the powder material disposed on the table, an irradiation unit irradiating the powder material disposed on the table with an energy beam, a state information acquisition unit outputting abnormal state information including information related to a state of the powder material disposed on the table and indicating a state where irradiation with the energy beam has to be stopped, and a control unit controlling at least the irradiation unit on the basis of the abnormal state information. The control unit has a stop operation unit outputting a first control signal for stopping irradiation with the energy beam due to an input of the abnormal state information, and a return operation unit determining whether or not the abnormal state information is information related to the state of the powder material and outputting a second control signal for controlling at least one of rotating operation of the table, heating operation of the heating unit, and supplying operation of the supply unit when the abnormal state information is information related to the state of the powder material.

### Effects of Invention

In the rotating additive manufacturing device and the control device according to the aspect of the present disclosure, it is possible to achieve a manufacturing object satisfying desired manufacturing quality.

### Brief Description of Drawings

FIG. 1 is a view illustrating a constitution of a rotating additive manufacturing device according to a first embodiment.
FIG. 2 is an explanatory schematic view of a positional relationship between a processing unit, a temperature information acquisition unit, and a table. FIG. 2(a) illustrates a state before the table is rotated. FIG. 2(b) illustrates a state after the table is rotated.
FIG. 3 is a block diagram showing the rotating additive manufacturing device according to the first embodiment.
FIG. 4 is an explanatory timing chart of retrying of manufacturing.
FIG. 5 is a flowchart showing an example of processing when an abnormality occurs in the rotating additive manufacturing device according to the first embodiment.
FIG. 6 is a view illustrating a constitution of a rotating additive manufacturing device according to a second embodiment.
FIG. 7 is a block diagram showing the rotating additive manufacturing device according to the second embodiment.
FIG. 8 is a flowchart showing an example of processing when an abnormality occurs in the rotating additive manufacturing device according to the second embodiment.
FIG. 9 is a view illustrating a constitution of a rotating additive manufacturing device according to a third embodiment.
FIG. 10 is a block diagram showing the rotating additive manufacturing device according to the third embodiment.
FIG. 11 is a flowchart showing an example of processing when an abnormality occurs in the rotating additive manufacturing device according to the third embodiment.

### Description of Embodiments

A rotating additive manufacturing device according to an aspect of the present disclosure includes a table rotatively supporting a powder material, a supply unit supplying the powder material to the table, a heating unit heating the powder material disposed on the table, an irradiation unit irradiating the powder material disposed on the table with an energy beam, a state information acquisition unit outputting abnormal state information including information related to a state of the powder material disposed on the table and indicating a state where irradiation with the energy beam has to be stopped, and a control unit controlling at least the irradiation unit on the basis of the abnormal state information. The control unit has a stop operation unit outputting a first control signal for stopping irradiation with the energy beam due to an input of the abnormal state information, and a return operation unit determining whether or not the abnormal state information is information related to the state of the powder material and outputting a second control signal for controlling at least one of rotating operation of the table, heating operation of the heating unit, and supplying operation of the supply unit when the abnormal state information is information related to the state of the powder material.

A control device according to another aspect of the present disclosure controls a three-dimensional manufacturing device manufacturing a three-dimensional manufacturing object by heating a powder material supplied onto a rotating table from a supply unit using a heating unit and irradiating the powder material with an energy beam. The control device includes a stop operation unit outputting a first control signal for stopping irradiation with the energy beam due to an input of abnormal state information including information related to a state of the powder material disposed on the table and indicating a state where irradiation with the energy beam has to be stopped, and a return operation unit determining whether or not the abnormal state information is information related to the state of the powder material and outputting a second control signal for controlling at least one of rotating operation of the table, heating operation of the heating unit, and supplying operation of the supply unit when the abnormal state information is information related to the state of the powder material.

The rotating additive manufacturing device and the control device heat the powder material while rotating the table and irradiate the powder material with an energy beam. The rotating additive manufacturing device and the control device stop irradiation with an energy beam due to an input of the abnormal state information. The rotating additive manufacturing device and the control device control at least one of rotating operation of the table, heating operation of the heating unit, and supplying operation of the supply unit when the abnormal state information is information related to the state of the powder material. According to such a constitution, at the time of a state where irradiation with an energy beam has to be stopped, at least one of rotating operation of the table, heating operation of the heating unit, and supplying operation of the supply unit is controlled. Accordingly, even in a state where irradiation with an energy beam is stopped, it is possible to achieve a state desired for the powder material in order to obtain desired manufacturing quality. Therefore, a manufacturing object satisfying desired manufacturing quality can be obtained.

The state information acquisition unit may include a smoke information acquisition unit outputting smoke information for judging the presence or absence of the powder material in a scattered state to the control unit as information related to the state of the powder material. The return operation unit may output a signal for controlling rotating operation of the table and heating operation of the heating unit as the second control signal when the smoke information constituting the abnormal state information received from the state information acquisition unit indicates generation of the smoke. According to such a constitution, when smoke is generated, rotating operation of the table and heating operation of the heating unit are controlled. Accordingly, even when smoke is generated and manufacturing operation is stopped, it is possible to achieve a state desired for the powder material in order to obtain desired manufacturing quality. Therefore, a manufacturing object satisfying desired manufacturing quality can be obtained.

The state information acquisition unit may include an unevenness information acquisition unit outputting unevenness information indicating a state of unevenness on a surface of the powder material irradiated with the energy beam to the control unit as information related to the state of the powder material. The return operation unit may output a signal for controlling rotating operation of the table and supplying operation of the supply unit as the second control signal when the unevenness information constituting the abnormal state information received from the state information acquisition unit does not satisfy predetermined conditions for unevenness. According to such a constitution, when the state of unevenness formed on the surface of the powder material does not satisfy predetermined conditions for unevenness, rotating operation of the table and supplying operation of the supply unit are controlled. Accordingly, even when the manufacturing operation is stopped, it is possible to achieve a state desired for the powder material in order to obtain desired manufacturing quality. Therefore, a manufacturing object satisfying desired manufacturing quality can be obtained.

The stop operation unit may output a third control signal also for stopping rotating operation of the table, heating operation of the heating unit, and supplying operation of the supply unit due to an input of the abnormal state information. The return operation unit may output a fourth control signal for restarting at least one of rotating operation of the table, heating operation of the heating unit, and supplying operation of the supply unit when the abnormal state information is information related to the state of the powder material. According to such a constitution, in a state where irradiation with an energy beam has to be stopped, rotating operation of the table, heating operation of the heating unit, and supplying operation of the supply unit can also be stopped.

The control unit may further have a restart operation unit outputting a fifth control signal for starting irradiation with the energy beam when the abnormal state information satisfies predetermined conditions. According to this constitution, the manufacturing operation can be restarted after it is confirmed that a state desired for the powder material is secured in order to obtain desired manufacturing quality. Therefore, a manufacturing object satisfying desired manufacturing quality can be obtained.

Hereinafter, a rotating additive manufacturing device and a control device of the present disclosure will be described in detail with reference to the drawings. In each of the drawings, the same reference signs are applied to the same parts or corresponding parts, and duplicate description will be omitted.

### [First embodiment]

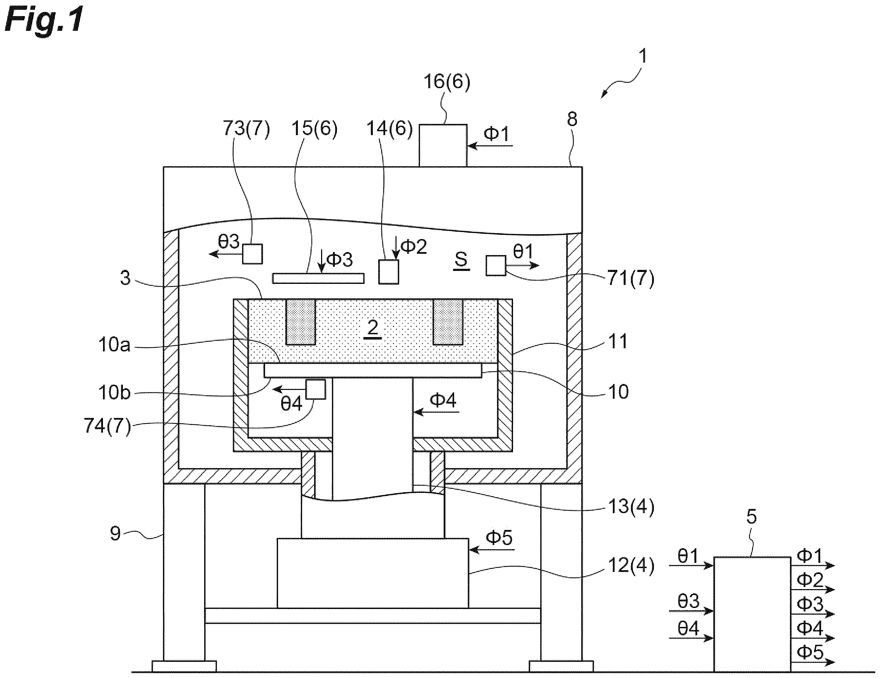

FIG. 1 is a view illustrating a constitution of a rotating additive manufacturing device (three-dimensional manufacturing device) 1 according to a first embodiment. The rotating additive manufacturing device 1 is a so-called 3D printer. The rotating additive manufacturing device 1 produces a three-dimensional manufacturing object (three-dimensional-manufacturing object) 3 from a powder material 2. The powder material 2 is a metal powder. For example, the powder material 2 is a titanium-based metal powder, an Inconel powder, an aluminum powder, or the like. The powder material 2 is not limited to a metal powder. For example, the powder material 2 may be a powder including carbon fibers and resin, such as a resin powder or carbon fiber reinforced plastics (CFRP). The powder material 2 may be other powders having conductivity. The powder material 2 in the present disclosure is not limited to that having conductivity. For example, when a laser is used as an energy beam, the powder material 2 may not have conductivity.

The rotating additive manufacturing device 1 employs a powder bed type performing manufacturing by irradiating the powder material 2 that has been laid and leveled with an electron beam. The rotating additive manufacturing device 1 applies an energy to the powder material 2 by irradiating the powder material 2 with an electron beam. If the rotating additive manufacturing device 1 applies an energy to the powder material 2, the temperature of the powder material 2 rises. As a result, the powder material 2 is melted or sintered. If the rotating additive manufacturing device 1 stops applying energy, the temperature of the powder material 2 falls. As a result, the powder material 2 coagulates. The rotating additive manufacturing device 1 manufactures the three-dimensional manufacturing object 3 by repeating applying and stopping of an energy a plurality of times.

The rotating additive manufacturing device 1 includes a drive unit (drive member) 4, a control unit (control device, controller) 5, a processing unit (processing member) 6, a state information acquisition unit 7, and a housing 8. The drive unit 4 realizes various kinds of operation required for manufacturing. The control unit 5 carries out control of the entire rotating additive manufacturing device 1. The processing unit 6 performs processing of the powder material 2 and obtains the manufacturing object 3. Processing of the powder material 2 includes supply processing of the powder material 2, preheating processing of the powder material 2, and manufacturing processing of the powder material 2. The state information acquisition unit 7 acquires information indicating various kinds of states related to manufacturing. The housing 8 forms a manufacturing space S. The manufacturing space S is an air-tight space that can be decompressed such that the processing unit 6 performs processing of the powder material 2. The housing 8 is supported by a plurality of columns 9.

A table 10 and a manufacturing tank 11 are disposed in the manufacturing space S. The table 10 rotatably supports the powder material 2. For example, the table 10 exhibits a disk shape. The table 10 is disposed such that a center axis of the table 10 overlaps a center axis of the housing 8. The table 10 has a manufacturing surface (a main surface or an upper surface) 10a and a rear surface 10b. The powder material 2 that is a raw material of the manufacturing object 3 is disposed on the manufacturing surface 10a. The drive unit 4 is connected to the rear surface 10b. The manufacturing tank 11 is a container accommodating the powder material 2. The manufacturing tank 11 is disposed in a manner of surrounding the table 10.

The drive unit 4 rotates, raises, and lowers the table 10. The drive unit 4 has a rotation unit 12 and a raising/lowering unit 13. The rotation unit 12 rotates the table 10 with the center axis of the table 10 as a rotary axis. An upper end of the rotation unit 12 is joined to the table 10. A driving source (for example, a motor) is attached to a lower end of the rotation unit 12. The raising/lowering unit 13 relatively raises and lowers the table 10 with respect to the manufacturing tank 11. The table 10 is raised and lowered along the rotary axis of the rotation unit 12. The drive unit 4 need only be a mechanism that can rotate, raise, and lower the table 10 and is not limited to the mechanism described above.

The control unit 5 controls operation of the drive unit 4 and the processing unit 6. The control unit 5 receives abnormal state information from the state information acquisition unit 7.

The processing unit 6 is disposed in a manner of facing the table 10. For example, the processing unit 6 is disposed above the table 10 and faces the manufacturing surface 10a of the table 10. The processing unit 6 has a feeder 14, a heater (heating unit) 15, and a beam source (irradiation unit) 16. The feeder 14 performs supply processing of the powder material 2. The heater 15 performs preheating processing of the powder material 2. The beam source 16 performs manufacturing processing of the powder material 2.

The feeder 14 functions as a supply unit for supplying the powder material 2 to the table 10. For example, the feeder 14 has a raw material tank and a leveling unit. The raw material tank stores the powder material 2. The raw material tank supplies the powder material 2 to the table 10. The leveling unit levels the surface of the powder material 2 on the table 10. For example, a surface layer of the powder material 2 on the table 10 abuts the leveling unit in accordance with rotation of the table 10 and is laid and leveled. In place of the leveling unit, the rotating additive manufacturing device 1 may have a roller unit, a rod-shaped member, a brush unit, or the like.

The heater 15 functions as a heating unit for heating the powder material 2 disposed on the table 10. The heater 15 performs preheating with respect to the powder material 2 before being irradiated with an electron beam. For example, the heater 15 raises the temperature of the powder material 2 by means of radiant heat. The heater 15 may be a heater for performing heating by other methods. For example, it may be an infrared heater.

The beam source 16 functions as an irradiation unit for irradiating the powder material 2 disposed on the table 10 with an electron beam. For example, the beam source 16 is an electron gun. The electron gun generates an electron beam corresponding to a potential difference generated between a cathode and an anode. The beam source 16 irradiates the powder material 2 with an electron beam.

The state information acquisition unit 7 outputs the abnormal state information indicating a state where irradiation with an electron beam has to be stopped. The abnormal state information includes information related to the state of the powder material 2 disposed on the table 10. The state information acquisition unit 7 has a smoke information acquisition unit 71, an equipment information acquisition unit 73, and a temperature information acquisition unit 74.

The smoke information acquisition unit 71 outputs a smoke information θ1 to the control unit 5 as information related to the state of the powder material 2. The smoke information θ1 is used for judging the presence or absence of the powder material 2 in a scattered state. The powder material 2 is electrified due to irradiation with an electron beam. Due to electrification of the powder material 2, the powder material 2 may be blown up in a mist form. A phenomenon in which the powder material 2 is blown up in a mist form is referred to as smoke. The smoke information θ1 indicates whether or not scattering of the powder material 2 has occurred to the extent that manufacturing operation is affected. The smoke information θ1 may be information specifying whether or not smoke has been generated. The smoke information θ1 may be a measurement value that may be the basis of judgment for determining whether or not smoke has been generated.

For example, the smoke information acquisition unit 71 may be an optical sensor. The smoke information acquisition unit 71 may acquire, as the smoke information θ1, an optical intensity having a particular wavelength in light emitted from the powder material 2.

If smoke is generated, electromagnetic waves (X-rays) having a particular wavelength are generated. The smoke information acquisition unit 71 may be a sensor for detecting electromagnetic waves having a particular wavelength. For example, the smoke information θ1 output by the smoke information acquisition unit 71 includes information (1) indicating that smoke has been generated, and information (0) indicating that smoke has not been generated. During the manufacturing operation, the smoke information acquisition unit 71 outputs the information (0) indicating that smoke has not been generated. Further, when smoke is generated at a certain timing, the smoke information acquisition unit 71 outputs the information (1) indicating that smoke has been generated.

Various kinds of physical characteristics related to the powder material 2 affect generation of smoke. Such characteristics include an electrostatic capacity of the powder material 2 or an electrical resistance value of the powder material 2. The smoke information acquisition unit 71 may measure a characteristic value of the powder material 2 and output a measurement value obtained through measurement. In this case, the smoke information θ1 is a measurement value. The measurement value does not directly specify whether or not smoke has been generated. However, the presence or absence of generation of smoke can be determined by comparing the measurement value with a threshold that has been set in advance. Determination of the presence or absence of generation of smoke may be performed by the smoke information acquisition unit 71 or may be performed by a different constituent element. When a different constituent element performs determination of the presence or absence of generation of smoke, the smoke information acquisition unit 71 outputs a measurement value as the smoke information θ1.

The smoke information acquisition unit 71 need only be able to acquire the smoke information θ1 and is not limited to the constitution described above.

The equipment information acquisition unit 73 detects an obstacle to the rotating additive manufacturing device 1. The equipment information acquisition unit 73 outputs an obstacle information Θ3 to the control unit 5 as information related to an obstacle. Examples of the obstacle information θ3 include an abnormality in pressure in the manufacturing space S, a failure of the drive unit 4, a failure of the processing unit 6, and other abnormalities prompting the manufacturing processing to be stopped from continuing.

The temperature information acquisition unit 74 measures the temperature on the manufacturing surface 10a. The temperature information acquisition unit 74 outputs a temperature information Θ4 to the control unit 5 as information related to a temperature. For example, the temperature information acquisition unit 74 may be a thermocouple. The temperature information acquisition unit 74 may be attached to the rear surface 10b of the table 10. The temperature information acquisition unit 74 may acquire the temperature information Θ4 by other methods. For example, the temperature information acquisition unit 74 may measure a distribution of the temperature on the manufacturing surface 10a using an infrared camera. The temperature information acquisition unit 74 may acquire the temperature information Θ4 related to a plurality of measurement locations. The temperature information Θ4 may be a plurality of values of temperatures related to a plurality of measurement locations. The temperature information Θ4 may be a representative value obtained on the basis of a plurality of values of temperatures.

With reference to FIG. 1, operation in the rotating additive manufacturing device 1 during manufacturing will be described. The raising/lowering unit 13 moves the table 10 upward. The table 10 is disposed at a position above the manufacturing tank 11. The rotation unit 12 rotates the table 10.

The feeder 14 supplies the powder material 2 to the table 10. A surface of the supplied powder material 2 is leveled by a recoater. The powder material 2 supplied by the feeder 14 moves in accordance with rotation of the table 10.

The heater 15 preheats the powder material 2 before being irradiated with an electron beam. The powder material 2 is heated while rotating together with the table 10. The powder material 2 preheated by the heater 15 moves in accordance with rotation of the table 10.

The beam source 16 irradiates the powder material 2 with an electron beam. Accordingly, the powder material 2 is melted or sintered, and the manufacturing object 3 is being manufactured.

The table 10 is lowered as manufacturing of the manufacturing object 3 proceeds. That is, the raising/lowering unit 13 lowers the table 10. Lowering of the table 10 may be synchronized with rotation of the table 10, but it may not be completely synchronized therewith.

Further, after manufacturing is completed for all layers, manufacturing of the manufacturing object 3 is completed.

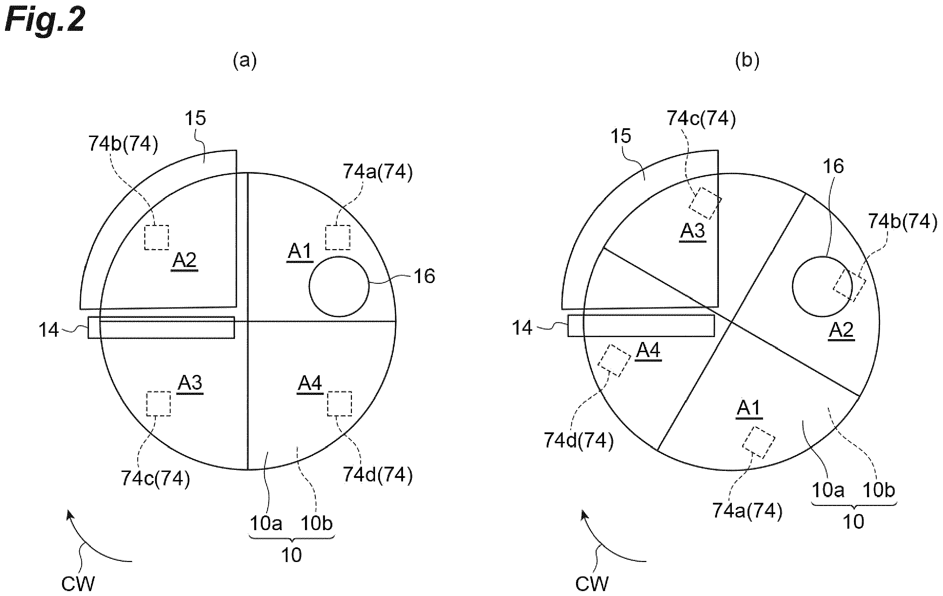

FIG. 2 is an explanatory schematic view of a positional relationship between the processing unit 6, the temperature information acquisition unit 74, and the table 10. FIG. 2(a) illustrates a state before the table 10 is rotated. The table 10 rotates in a rotation direction CW. The rotation direction CW is a clockwise direction. The feeder 14, the heater 15, and the beam source 16 are disposed above the table 10 in this order in the rotation direction CW of the table 10.

The feeder 14 forms a supply region on the manufacturing surface 10a. The supply region is a region in which the powder material 2 is supplied and leveled on the table 10. For example, the supply region exhibits a rectangular shape with a diameter direction (radial direction) of the table 10 as a longitudinal direction, but it is not limited to this.

The heater 15 forms a preheating region on the manufacturing surface 10a. The preheating region is a region in which the temperature of the powder material 2 is raised. The heater 15 performs heating such that the temperature of the powder material 2 present in the preheating region becomes higher than the temperature of the powder material 2 present in the supply region. Such heating processing may be processing in which the powder material 2 is temporarily sintered, for example. Temporary sintering indicates a state where the powder materials 2 are diffused and joined at a minimum point by a diffusion phenomenon. As an example, a temporary sintering temperature is equal to or higher than half a melting point of the powder material 2. This is based on the fact that the diffusion phenomenon of the powder material 2 generally becomes active at a temperature equal to or higher than half the melting point. For example, when the powder material 2 is a titanium, the temporary sintering temperature is 700°C to 800°C. The melting point of a titanium alloy is approximately 1,500°C to 1,600°C. When the powder material 2 is aluminum, the temporary sintering temperature is 300°C. The melting point of an aluminum is approximately 660°C. For example, the preheating region exhibits a fan shape of, but it is not limited to this.

The beam source 16 forms a manufacturing region on the manufacturing surface 10a. The manufacturing region is a region in which the temperature of the powder material 2 is raised. The temperature of the powder material 2 heated in the manufacturing region is higher than the temperature of the powder material 2 present in the preheating region. The temperature of the powder material 2 present in the manufacturing region is a temperature at which the manufacturing object 3 can be formed (a sintering temperature or a melting temperature). The beam source 16 irradiates a desired part within the manufacturing region by scanning it with an electron beam. For example, the shape of the manufacturing region is a circular shape, but it is not limited to this. The manufacturing region may coincide with an irradiation range (irradiation coverage range) of the beam source 16 or may not coincide therewith.

A positional relationship between the supply region, the preheating region, and the manufacturing region corresponds to a positional relationship between the feeder 14, the heater 15, and the beam source 16. The supply region, the preheating region, and the manufacturing region need only be formed in this order in the rotation direction CW. The regions respectively occupied by the supply region, the preheating region, and the manufacturing region may be suitably changed.

The manufacturing surface 10a of the table 10 virtually includes four regions. Four regions are division regions A1, A2, A3, and A4. Namely, the rotating additive manufacturing device 1 has a plurality of divided regions. The division regions A1, A2, A3, and A4 move in accordance with rotation of the table 10.

The temperature information acquisition unit 74 may be attached to the rear surface 10b of the table 10 at a plurality of locations. For example, the temperature information acquisition unit 74 has thermocouples 74a, 74b, 74c, and 74d. The thermocouples 74a, 74b, 74c, and 74d respectively measure the temperatures of the division regions A1, A2, A3, and A4. The thermocouple 74a is provided in the division region A1. The thermocouple 74a measures the temperature of the division region A1. The thermocouple 74b is provided in the division region A2. The thermocouple 74b measures the temperature of the division region A2. The thermocouple 74c is provided in the division region A3. The thermocouple 74c measures the temperature of the division region A3. The thermocouple 74d is provided in the division region A4. The thermocouple 74d measures the temperature of the division region A4. The temperature information acquisition unit 74 is fixed to the table 10. Therefore, the temperature information acquisition unit 74 moves in accordance with rotation of the table 10. The thermocouples 74a, 74b, 74c, and 74d are fixed to the rear surface 10b of the table 10. Therefore, the temperatures output by the thermocouples 74a, 74b, 74c, and 74d are temperatures on the rear surface 10b of the table 10. However, the rotating additive manufacturing device 1 of the present embodiment utilizes the temperature on the rear surface 10b of the table 10 as the temperature of the powder material 2 disposed thereabove. For example, the rotating additive manufacturing device 1 may utilize the temperatures obtained by the thermocouples 74a, 74b, 74c, and 74d themselves as the temperature of the powder material 2. The rotating additive manufacturing device 1 may utilize the temperatures obtained by the thermocouples 74a, 74b, 74c, and 74d, which are converted into the temperature of the powder material 2 using a relational expression obtained in advance.

FIG. 2(b) illustrates a state after the table 10 is rotated. The positions of the feeder 14, the heater 15, and the beam source 16 do not change in accordance with rotation of the table 10. The position of the temperature information acquisition unit 74 changes in accordance with rotation of the table 10.

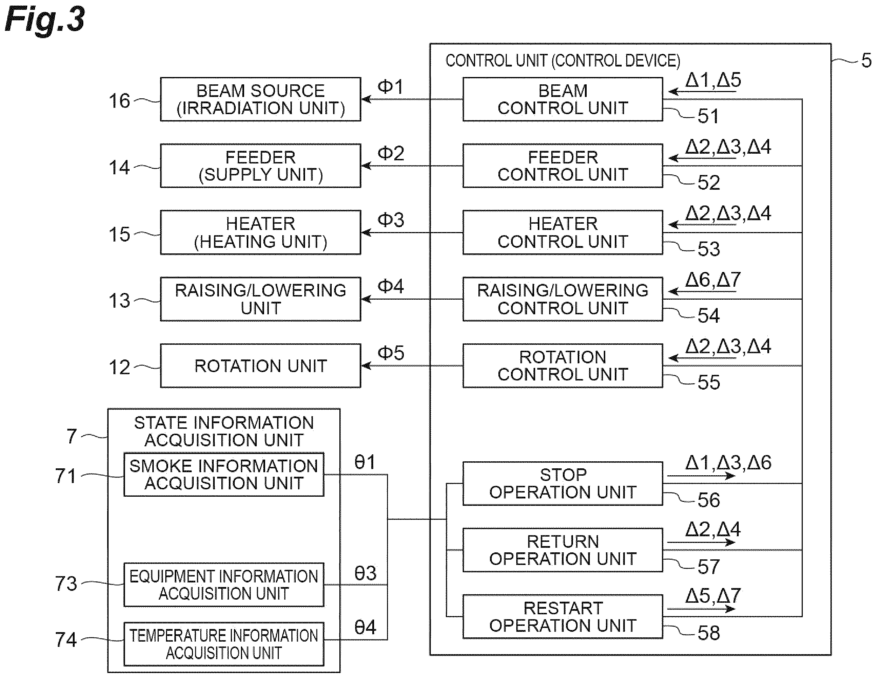

FIG. 3 is a block diagram showing the control unit (control device) 5 included in the rotating additive manufacturing device 1 according to the first embodiment. The control unit 5 is a computer constituted of hardware such as a central processing unit (CPU), a read only memory (ROM), and a random access memory (RAM); and software such as a program stored in the ROM. The control unit 5 includes an input signal circuit, an output signal circuit, a power source circuit, and the like. The control unit 5 includes a computation unit and a memory. The memory can save data required for various kinds of control.

The control unit 5 may be electrically connected to the rotation unit 12, the raising/lowering unit 13, the feeder 14, the heater 15, and the beam source 16. The control unit 5 controls at least the beam source 16 on the basis of the abnormal state information. The control unit 5 can generate various kinds of control signals. The control unit 5 has a beam control unit 51, a feeder control unit 52, a heater control unit 53, a raising/lowering control unit 54, a rotation control unit 55, a stop operation unit 56, a return operation unit 57, and a restart operation unit 58.

The beam control unit 51 performs irradiation control with an electron beam of melting or sintering the powder material 2. For example, the beam control unit 51 decides starting of irradiation with an electron beam, stopping of irradiation with an electron beam, a period of time of irradiation with an electron beam, a position of irradiation with an electron beam, and the like. The beam control unit 51 outputs an irradiation control signal φ1 for performing irradiation control to the beam source 16. The beam source 16 operates in response to the irradiation control signal φ1.

The feeder control unit 52 performs supply control of supplying the powder material 2 to the table 10. For example, the feeder control unit 52 decides a timing of supplying the powder material 2 onto the table 10, a supplying amount of the powder material 2, operation of the recoater (leveling unit), and the like. For example, the feeder control unit 52 may control a force of pressing the recoater against the powder material 2, an angle of the recoater with respect to the surface of the powder material 2, and the like. The feeder control unit 52 outputs a supply control signal φ2 for performing supply control to the feeder 14. The feeder 14 operates in response to the supply control signal φ2.

The heater control unit 53 performs heating control of heating the powder material 2 disposed on the table 10. For example, the heater control unit 53 decides a quantity of heat to be applied to the powder material 2, and the like. Operation of the heater control unit 53 may be regulated based on the quantity of heat emitted by the heater. Operation of the heater control unit 53 may be regulated based on the temperature of the heater itself. The quantity of heat applied to the powder material 2 may be decided in accordance with a material or a kind of the powder material 2, a rotation speed of the table 10, and the like. The heater control unit 53 outputs a heating control signal φ3 for performing heating control to the heater 15. The heater 15 operates in response to the heating control signal φ3.

The raising/lowering control unit 54 performs raising/lowering control of raising or lowering the table 10. For example, the raising/lowering control unit 54 decides a lowering speed of the table 10, and the like. The raising/lowering control unit 54 outputs a raising/lowering control signal φ4 for performing raising/lowering control to the raising/lowering unit 13. The raising/lowering unit 13 operates in response to the raising/lowering control signal φ4.

The rotation control unit 55 performs rotation control of rotating the table 10. For example, the rotation control unit 55 decides a rotation speed of the table 10, and the like. The rotation control unit 55 outputs a rotation control signal φ5 for performing rotation control to the rotation unit 12. The rotation unit 12 operates in response to the rotation control signal φ5.

The stop operation unit 56 outputs a first control signal Δ1 for stopping irradiation with an electron beam due to an input of the abnormal state information to the beam control unit 51. The beam control unit 51 stops irradiation with an electron beam in response to the first control signal Δ1.

The stop operation unit 56 outputs a sixth control signal Δ6 for stopping raising and lowering of the table 10 due to an input of the abnormal state information to the raising/lowering control unit 54. The raising/lowering control unit 54 stops raising and lowering of the table 10 in response to the sixth control signal Δ6.

The return operation unit 57 determines whether or not the abnormal state information is information related to the state of the powder material 2. When the abnormal state information is information related to the state of the powder material 2, the return operation unit 57 outputs a second control signal Δ2 for controlling at least one of rotating operation of the table 10, heating operation of the heater 15, and supplying operation of the feeder 14.

For example, the return operation unit 57 may output the second control signal Δ2 for continuing rotating operation of the table 10 to the rotation control unit 55. The rotation control unit 55 continues rotating operation of the table 10 in response to the second control signal Δ2. The return operation unit 57 may continue rotating operation of the table 10 by not outputting the second control signal Δ2 for stopping rotating operation of the table 10.

For example, the return operation unit 57 may output the second control signal Δ2 for continuing heating operation of the heater 15 to the heater control unit 53. The heater control unit 53 continues heating operation of the heater 15 in response to the second control signal Δ2. The return operation unit 57 may continue heating operation of the heater 15 by not outputting the second control signal Δ2 for stopping heating operation of the heater 15.

For example, the return operation unit 57 may output the second control signal Δ2 for stopping supplying operation of the feeder 14 to the feeder control unit 52. The feeder control unit 52 stops supplying operation of the feeder 14 in response to the second control signal Δ2.

When the smoke information θ1 constituting the abnormal state information received from the state information acquisition unit 7 indicates generation of smoke, the return operation unit 57 outputs a signal for controlling rotating operation of the table 10 and heating operation of the heater 15 as the second control signal Δ2. Determining whether or not the smoke information θ1 indicates generation of smoke may be performed by any of the smoke information acquisition unit 71, the stop operation unit 56, and the return operation unit 57.

When the abnormal state information satisfies predetermined conditions, the restart operation unit 58 outputs a fifth control signal Δ5 for starting irradiation with an electron beam to the beam control unit 51. The beam control unit 51 starts irradiation with an electron beam in response to the fifth control signal Δ5. A case where the abnormal state information satisfies predetermined conditions will be described below.

When the abnormal state information satisfies predetermined conditions, the restart operation unit 58 outputs a seventh control signal Δ7 for starting raising or lowering the table 10 to the raising/lowering control unit 54. The raising/lowering control unit 54 starts raising or lowering the table 10 in response to the seventh control signal Δ7.

The stop operation unit 56 may output a third control signal Δ3 also for stopping rotating operation of the table 10, heating operation of the heater 15, and supplying operation of the feeder 14 due to an input of the abnormal state information. For example, the stop operation unit 56 may output the third control signal Δ3 to the rotation control unit 55. The rotation control unit 55 that has received the third control signal Δ3 stops rotating operation of the table 10 in response to the third control signal Δ3. The stop operation unit 56 may output the third control signal Δ3 to the heater control unit 53. The heater control unit 53 that has received the third control signal Δ3 stops heating operation of the heater 15 in response to the third control signal Δ3. The stop operation unit 56 may output the third control signal Δ3 to the feeder control unit 52. The feeder control unit 52 that has received the third control signal Δ3 stops supplying operation of the feeder 14 in response to the third control signal Δ3.

When the abnormal state information is information related to the state of the powder material 2, the return operation unit 57 may output a fourth control signal Δ4. The fourth control signal Δ4 restarts at least one of rotating operation of the table 10, heating operation of the heater 15, and supplying operation of the feeder 14.

For example, the return operation unit 57 may output the fourth control signal Δ4 for restarting rotating operation of the table 10 to the rotation control unit 55. The rotation control unit 55 restarts rotating operation of the table 10 in response to the fourth control signal Δ4.

For example, the return operation unit 57 may output the fourth control signal Δ4 for restarting heating operation of the heater 15 to the heater control unit 53. The heater control unit 53 restarts heating operation of the heater 15 in response to the fourth control signal Δ4.

For example, the return operation unit 57 may output the fourth control signal Δ4 for restarting supplying operation of the feeder 14 to the feeder control unit 52. The feeder control unit 52 restarts supplying operation of the feeder 14 in response to the fourth control signal Δ4.

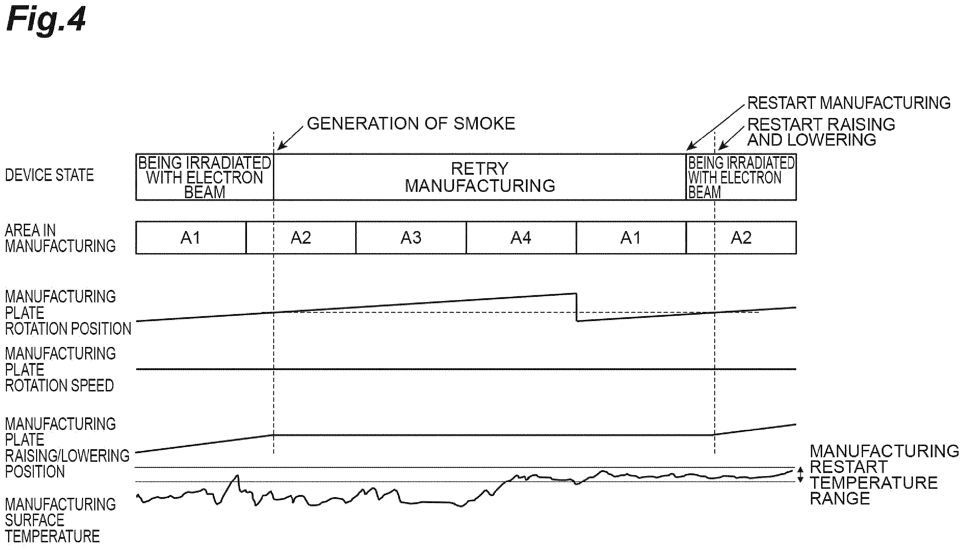

FIG. 4 is an explanatory timing chart of retrying of manufacturing. Retrying of manufacturing is processing performed to restart the manufacturing processing. FIG. 4 shows an example of change with the lapse of time regarding each of a state of the device, a manufacturing area, a rotation position of a manufacturing plate, a rotation speed of the manufacturing plate, a raising/lowering position of the manufacturing plate, and a temperature on the manufacturing surface. The state of the device is an operation state of the rotating additive manufacturing device 1. The manufacturing area is a division region while passing through the manufacturing region. The rotation position of the manufacturing plate is a rotation angle of the table 10. The rotation speed of the manufacturing plate is a rotation speed of the table 10. The raising/lowering position of the manufacturing plate is a raising/lowering position of the table 10. The temperature on the manufacturing surface is a temperature on the manufacturing surface 10a.

The rotation speed of the table 10 is constant. In accordance with rotation of the table 10, the division regions A1, A2, A3, and A4 enter the manufacturing region in this order and become the manufacturing area.

First, the division region A1 enters the manufacturing region and becomes the manufacturing area. While the powder material 2 in the division region A1 is irradiated with an electron beam, the table 10 is consecutively lowered.

Subsequently, the division region A2 enters the manufacturing region and becomes the manufacturing area. As an example, while the division region A2 passes through the manufacturing region, it is assumed that an abnormality (smoke) has been generated in the rotating additive manufacturing device 1. The control unit 5 receives abnormal state information from the state information acquisition unit 7. The control unit 5 outputs the irradiation control signal φ1 to the beam source 16 and stops irradiation with an electron beam. The control unit 5 outputs the raising/lowering control signal φ4 to the raising/lowering unit 13 and stops raising and lowering of the table 10. In this case, details of the abnormality indicated by the abnormal state information output by the state information acquisition unit 7 are not determined. Namely, on condition that the stop operation unit 56 of the control unit 5 receives the abnormal state information, the control unit 5 stops irradiation with an electron beam.

When the smoke information θ1 constituting the abnormal state information indicates generation of smoke, the control unit 5 starts retrying of manufacturing. In the stop operation unit 56 described above, details of input abnormal state information are not determined. The return operation unit 57 determines details of the abnormality indicated by the input abnormal state information. Specifically, it is determined whether or not the input abnormal state information is an abnormality related to the powder material 2. When it is an abnormality of the powder material 2, there is a probability that the abnormal state will be able to be recovered by operation of at least one of the feeder 14, the heater 15, the raising/lowering unit 13, and the rotation unit 12. In this case, the control unit 5 performs operation of retrying manufacturing, which will be described below. Operation of retrying manufacturing denotes operation of securing a state where the manufacturing operation can be restarted. When it is not an abnormality of the powder material 2, there is a low probability that the abnormal state will be able to be recovered by operation of at least one of the feeder 14, the heater 15, the raising/lowering unit 13, and the rotation unit 12. Therefore, in this case, the control unit 5 stops operation of the entire rotating additive manufacturing device 1 as described in Steps S32, S34, and S35, which will be described below.

For example, the return operation unit 57 performs retrying of manufacturing by controlling the heater 15 and the rotation unit 12. As an example, the return operation unit 57 decides heating operation of the heater 15 and rotating operation of the table 10 such that the temperature information Θ4 is included in a manufacturing restart temperature range. The manufacturing restart temperature range may be a temporary sintering temperature of the powder material 2. For example, when the powder material 2 is a titanium, the manufacturing restart temperature range is a temporary sintering temperature of 700°C to 800°C. If the temperature reaches the temporary sintering temperature, smoke is unlikely to be generated. When the temperature reaches the temporary sintering temperature, it is possible to determine that smoke has been resolved. The temperature information Θ4 may be temperatures related to a plurality of measurement locations. In this case, the return operation unit 57 may decide operation of the heater 15 and operation of the table 10 such that a part or all of the temperature information Θ4 is included in the manufacturing restart temperature range. For example, the temperature of the heater 15 and the rotation speed of the table 10 during manufacturing may be maintained. The temperature of the heater 15 and the rotation speed of the table 10 during manufacturing may be changed, and different values may be set.

During retrying of manufacturing, the beam source 16 stops irradiation with an electron beam. In contrast, heating operation of the heater 15 and rotating operation of the table 10 are continued. In accordance with rotation of the table 10, the division regions A3 and A4 enter the manufacturing region in this order. After one rotation of the table 10, the division region A1 enters the manufacturing region again.

When the abnormal state information satisfies predetermined conditions, the control unit 5 restarts the manufacturing processing. Examples of predetermined conditions include that the temperature on the manufacturing surface 10a is maintained at the manufacturing restart temperature, and that a region in which smoke has been generated (here, the division region A2) enters the manufacturing region again. The control unit 5 outputs the irradiation control signal φ1 to the beam source 16 and starts irradiation with an electron beam. The control unit 5 outputs the raising/lowering control signal φ4 to the raising/lowering unit 13 and starts lowering of the table 10. The control unit 5 may output the irradiation control signal φ1 and the raising/lowering control signal φ4 at the same time or may output them at different timings.

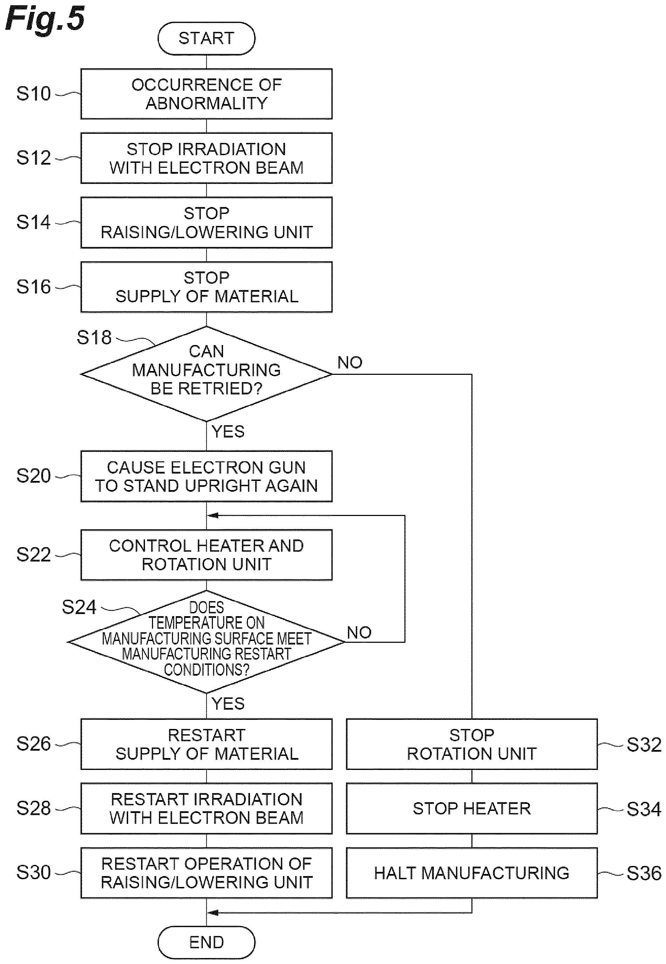

FIG. 5 is a flowchart showing an example of processing executed by the rotating additive manufacturing device 1 according to the first embodiment when an abnormality occurs.

The control unit 5 receives abnormal state information from the state information acquisition unit 7 (Step S10).

The control unit 5 stops irradiation with an electron beam (Step S12). The control unit 5 outputs the irradiation control signal φ1 to the beam source 16. The beam source 16 that has received the irradiation control signal φ1 stops irradiation with an electron beam.

The control unit 5 stops raising or lowering of the table 10 (Step S14). The control unit 5 outputs the raising/lowering control signal φ4 to the raising/lowering unit 13. The raising/lowering unit 13 that has received the raising/lowering control signal φ4 stops lowering of the table 10.

The control unit 5 stops supply of the powder material 2 (Step S16). The control unit 5 outputs the supply control signal φ2 to the feeder 14. The feeder 14 that has received the supply control signal φ2 stops supply of the powder material 2.

The control unit 5 determines whether or not manufacturing can be retried (Step S18). When the abnormal state information is the smoke information θ1, the control unit 5 determines that manufacturing can be retried. When the abnormal state information is the obstacle information Θ3, the control unit 5 determines that manufacturing cannot be retried. When manufacturing can be retried (YES in Step S18), the processing proceeds to Step S20. When manufacturing cannot be retried (NO in Step S18), the processing proceeds to Step S32.

The control unit 5 causes the electron gun to stand upright (Step S20). The control unit 5 outputs the irradiation control signal φ1 to the beam source 16 and causes the electron gun to stand upright. Causing the electron gun to stand upright denotes a state where irradiation can be performed with an electron beam from the electron gun. Namely, in Step S20, irradiation is not performed with an electron beam from the beam source 16.

The control unit 5 controls heating operation of the heater 15 and rotating operation of the table 10 (Step S22). The control unit 5 outputs the rotation control signal φ5 to the rotation unit 12. The rotation unit 12 that has received the rotation control signal φ5 continues rotating operation of the table 10. The control unit 5 outputs the heating control signal φ3 to the heater 15. The heater 15 that has received the heating control signal φ3 continues heating operation.

The control unit 5 determines whether or not the temperature on the manufacturing surface satisfies manufacturing restart conditions (Step S24). As an example, when the temperature information Θ4 is included in the manufacturing restart temperature range, the control unit 5 determines that it meets the manufacturing restart conditions. When the temperature information Θ4 is not included in the manufacturing restart temperature range, the control unit 5 determines that it does not meet the manufacturing restart conditions. When it meets the manufacturing restart conditions (YES in Step S24), the processing proceeds to Step S26. When it does not meet the manufacturing restart conditions (NO in Step S24), the processing returns to Step S22.

The control unit 5 restarts supply of the powder material 2 (Step S26). The control unit 5 outputs the supply control signal φ2 to the feeder 14. The feeder 14 that has received the supply control signal φ2 restarts supply of the powder material 2.

The control unit 5 restarts irradiation with an electron beam (Step S28). The control unit 5 outputs the irradiation control signal φ1 to the beam source 16. The beam source 16 that has received the irradiation control signal φ1 restarts irradiation with an electron beam.

The control unit 5 restarts raising and lowering of the table 10 (Step S30). The control unit 5 outputs the raising/lowering control signal φ4 to the raising/lowering unit 13. The raising/lowering unit 13 that has received the raising/lowering control signal φ4 restarts raising and lowering of the table 10.

The control unit 5 stops rotation of the table 10 (Step S32). The control unit 5 outputs the rotation control signal φ5 to the rotation unit 12. The rotation unit 12 that has received the rotation control signal φ5 stops rotation of the table 10.

The control unit 5 stops heating operation of the heater 15 (Step S34). The control unit 5 outputs the heating control signal φ3 to the heater 15. The heater 15 that has received the heating control signal φ3 stops heating operation.

The control unit 5 halts the manufacturing processing (Step S36).

The rotating additive manufacturing device 1 and the control unit 5 heat the powder material 2 while rotating the table 10 and irradiate the powder material 2 with an electron beam. The rotating additive manufacturing device 1 and the control unit 5 stop irradiation with an electron beam due to an input of the abnormal state information. When the abnormal state information is information related to the state of the powder material 2, the rotating additive manufacturing device 1 and the control unit 5 control at least one of rotating operation of the table 10, heating operation of the heater 15, and supplying operation of the feeder 14. According to such a constitution, even in a state where irradiation with an electron beam has to be stopped, at least one of rotating operation of the table 10, heating operation of the heater 15, and supplying operation of the feeder 14 is controlled. Accordingly, it is possible to curb increase in temperature difference in the powder material 2 when manufacturing is being stopped. As a result, it is possible to achieve a state desired for the powder material 2 in order to obtain desired manufacturing quality. Namely, it is possible to secure uniformity of temperature desired for the powder material 2 in order to obtain desired manufacturing quality. As a result, the manufacturing object 3 satisfying desired manufacturing quality can be achieved.

Regarding information related to the state of the powder material 2, the state information acquisition unit 7 includes the smoke information acquisition unit 71 outputting the smoke information θ1 for judging the presence or absence of the powder material 2 in a scattered state to the control unit 5. When the smoke information θ1 constituting the abnormal state information received from the state information acquisition unit 7 indicates generation of smoke, the return operation unit 57 outputs a signal for controlling rotating operation of the table 10 and heating operation of the heater 15 as the second control signal Δ2. According to such a constitution, when smoke is generated, rotating operation of the table 10 and heating operation of the heater 15 are controlled. Accordingly, it is possible to curb increase in temperature difference in the powder material 2 when manufacturing is being stopped. Further, the manufacturing operation can be restarted in a state where smoke has been resolved.

The stop operation unit 56 outputs the third control signal Δ3 also for stopping rotating operation of the table 10, heating operation of the heater 15, and supplying operation of the feeder 14 due to an input of the abnormal state information. When the abnormal state information is information related to the state of the powder material 2, the return operation unit 57 outputs the fourth control signal Δ4 for restarting at least one of rotating operation of the table 10, heating operation of the heater 15, and supplying operation of the feeder 14. According to such a constitution, in a state where irradiation with an electron beam has to be stopped, rotating operation of the table 10, heating operation of the heater 15, and supplying operation of the feeder 14 are also stopped. When the abnormal state information is information related to the state of the powder material 2, at least one of the operation is restarted. Accordingly, only the operation required to start manufacturing can be started. Further, it is possible to curb increase in temperature difference in the powder material 2 when manufacturing is being stopped.

When the abnormal state information satisfies predetermined conditions, the control unit 5 further has the restart operation unit 58 outputting the fifth control signal Δ5 for starting irradiation with an electron beam. Accordingly, manufacturing can be restarted in a state where an influence on the quality of the manufacturing object 3 is curbed.

### [Second embodiment]

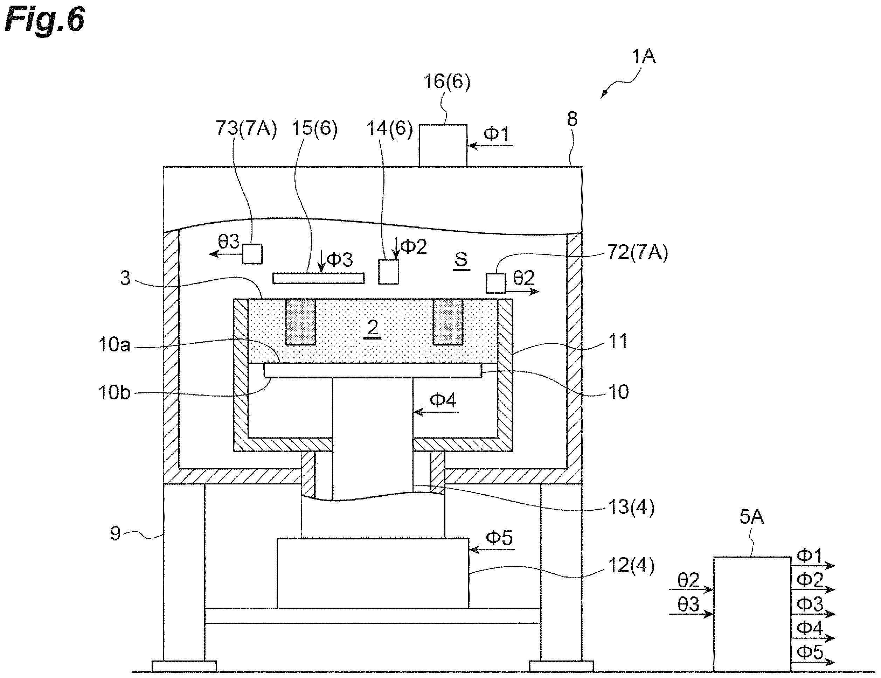

FIG. 6 is a view illustrating a cross section of a rotating additive manufacturing device 1A according to a second embodiment. The rotating additive manufacturing device 1A according to the second embodiment differs from the rotating additive manufacturing device 1 of the first embodiment in including an unevenness information acquisition unit 72 in place of the smoke information acquisition unit 71 and the temperature information acquisition unit 74.

A state information acquisition unit 7A has the unevenness information acquisition unit 72 and the equipment information acquisition unit 73. The unevenness information acquisition unit 72 outputs unevenness information Θ2 to a control unit 5A as information related to the state of the powder material 2. The unevenness information Θ2 indicates a state of unevenness on the surface of the powder material 2 irradiated with an electron beam. For example, the unevenness information acquisition unit 72 may be a camera. The unevenness information acquisition unit 72 captures an image of the surface layer (coated surface) of the powder material 2 and acquires the roughness of the surface layer as the unevenness information Θ2. The unevenness information acquisition unit 72 need only be able to acquire the unevenness information Θ2 and is not limited to the constitution described above.

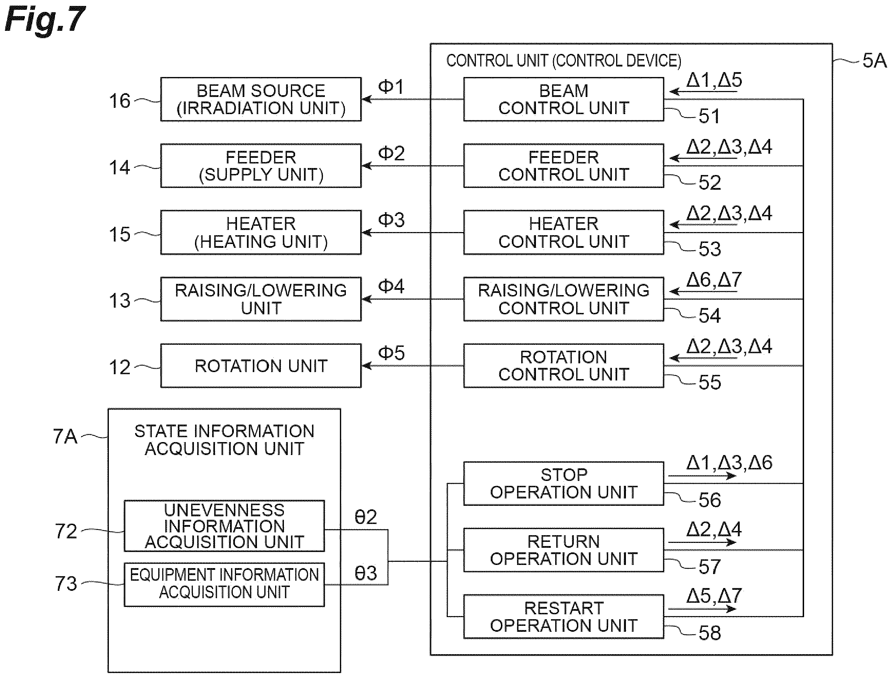

FIG. 7 is a block diagram showing a control unit (control device) 5A according to the second embodiment. When the unevenness information Θ2 constituting the abnormal state information received from the state information acquisition unit 7A does not satisfy predetermined conditions for unevenness, the return operation unit 57 outputs a signal for controlling rotating operation of the table 10 and supplying operation of the feeder 14 to the second control signal Δ2. Determining whether or not the unevenness information Θ2 satisfies the predetermined conditions for unevenness may be performed by any of the unevenness information acquisition unit 72, the stop operation unit 56, and the return operation unit 57.

For example, the return operation unit 57 decides rotating operation of the table 10 and supplying operation of the feeder 14 such that the unevenness information Θ2 satisfies the predetermined conditions for unevenness. The predetermined conditions for unevenness indicate that the roughness on the surface layer of the powder material 2 is smaller than a thickness corresponding to one layer, but it is not limited to this. As an example, the return operation unit 57 decides the supplying amount of the powder material 2. Further, the return operation unit 57 adjusts the supplying amount of the powder material 2 while continuing rotating operation of the table 10. As a result, the roughness on the surface layer of the powder material 2 is adjusted.

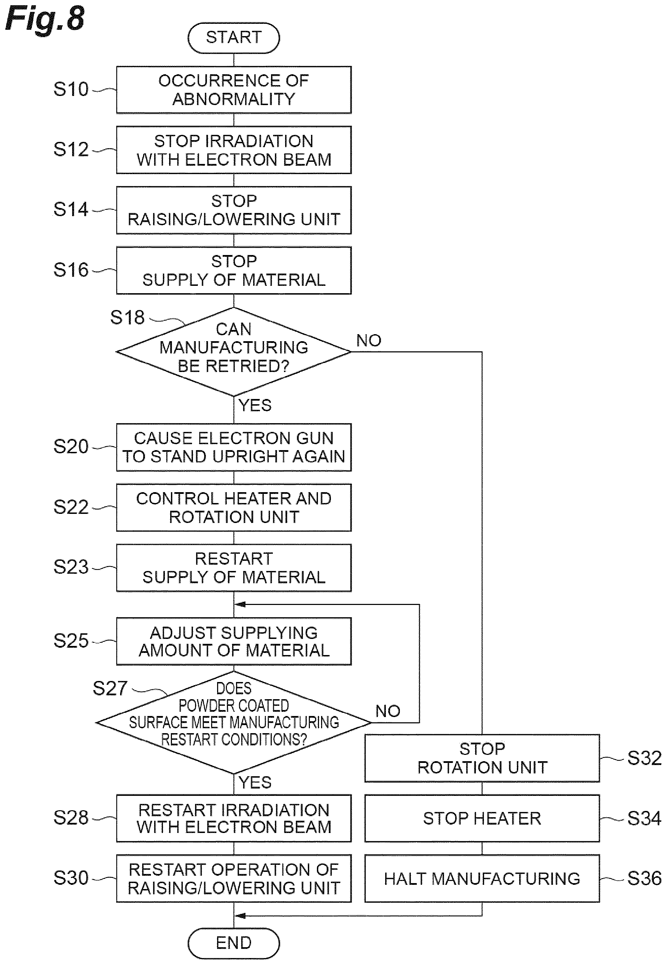

FIG. 8 is a flowchart showing an example of processing when an abnormality occurs in the rotating additive manufacturing device 1A according to the second embodiment. The processing flow of the rotating additive manufacturing device 1A according to the second embodiment differs from the processing flow of the rotating additive manufacturing device 1 according to the first embodiment in that determination in Step S18 differs. Further, the processing flow of the rotating additive manufacturing device 1A according to the second embodiment also differs from the processing flow of the rotating additive manufacturing device 1 according to the first embodiment in including Steps S23, S25 and S27 in place of Steps S24 and S26. In FIG. 8, regarding the same steps as those in the processing flow of the rotating additive manufacturing device 1 according to the first embodiment, description thereof will be omitted.

The control unit 5A determines whether or not manufacturing can be retried (Step S18). When the abnormal state information is the unevenness information Θ2, the control unit 5A determines that manufacturing can be retried. When the abnormal state information is the obstacle information Θ3, the control unit 5A determines that manufacturing cannot be retried. When manufacturing can be retried (YES in Step S18), the processing proceeds to Step S20. When manufacturing cannot be retried (NO in Step S18), the processing proceeds to Step S32.

The control unit 5A restarts supply of the powder material 2 (Step S23). The control unit 5A outputs the supply control signal φ2 to the feeder 14. The feeder 14 that has received the supply control signal φ2 restarts supply of the powder material 2.

The control unit 5A adjusts the supplying amount of the powder material 2 (Step S25). The control unit 5A outputs the supply control signal φ2 to the feeder 14. The feeder 14 that has received the supply control signal φ2 adjusts the supplying amount of the powder material 2.

The control unit 5A determines whether or not the surface layer of the powder material 2 meets the manufacturing restart conditions (Step S27). As an example, when the unevenness information θ2 is smaller than a thickness corresponding to one layer, the control unit 5A determines that it meets the manufacturing restart conditions. The thickness corresponding to one layer may be defined as a thickness of a manufacturing object increased during one rotation of the table 10. When the unevenness information Θ2 is equal to or larger than the thickness corresponding to one layer, the control unit 5A determines that it does not meet the manufacturing restart conditions. When it meets the manufacturing restart conditions (YES in Step S27), the processing proceeds to Step S28. When it does not meet the manufacturing restart conditions (NO in Step S27), the processing returns to Step S25.

The rotating additive manufacturing device 1A according to the second embodiment adjusts the state of unevenness of the powder material 2 while rotating the table 10 when manufacturing is being stopped. The state information acquisition unit 7A includes the unevenness information acquisition unit 72. The unevenness information acquisition unit 72 outputs the unevenness information Θ2 indicating a state of unevenness on the surface of the powder material 2 irradiated with an electron beam to the control unit 5A as information related to the state of the powder material 2. When the unevenness information Θ2 constituting the abnormal state information received from the state information acquisition unit 7A does not satisfy the predetermined conditions for unevenness, the return operation unit 57 outputs a signal for controlling rotating operation of the table 10 and supplying operation of the feeder 14 as the second control signal Δ2. According to such a constitution, when the state of unevenness on the surface of the powder material 2 does not satisfy the predetermined conditions for unevenness, rotating operation of the table 10 and supplying operation of the feeder 14 are controlled. Accordingly, it is possible to curb increase in temperature difference in the powder material 2 when manufacturing is being stopped. Further, the state of unevenness on the surface of the powder material 2 can be adjusted.

Such a rotating additive manufacturing device 1A according to the second embodiment also exhibits operational effects similar to those of the rotating additive manufacturing device 1 according to the first embodiment.

### [Third embodiment]

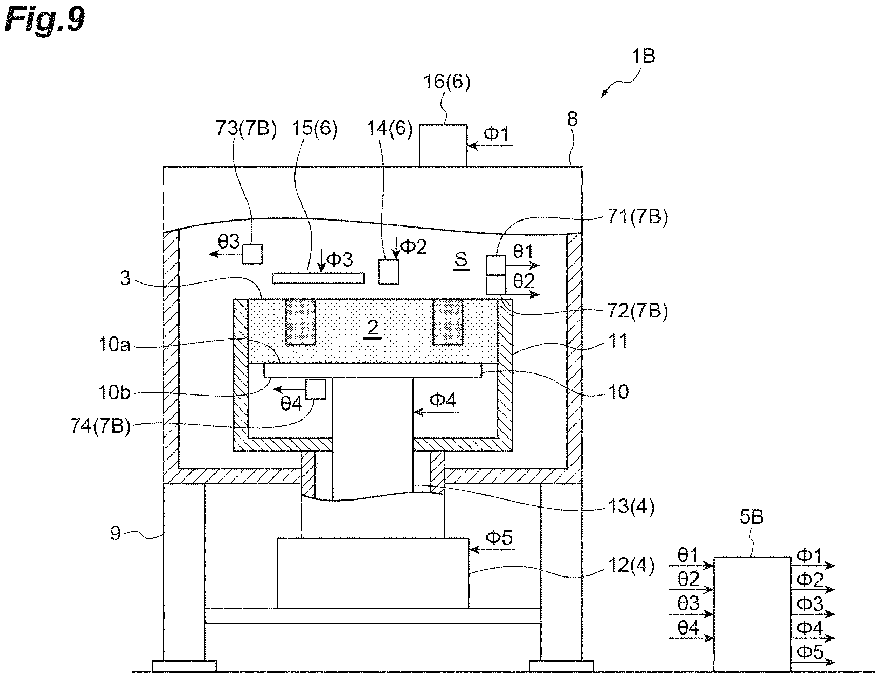

FIG. 9 is a view illustrating a cross section of a rotating additive manufacturing device 1B according to a third embodiment. In the rotating additive manufacturing device 1B according to the third embodiment, a state information acquisition unit 7B includes the smoke information acquisition unit 71, the unevenness information acquisition unit 72, the equipment information acquisition unit 73, and the temperature information acquisition unit 74.

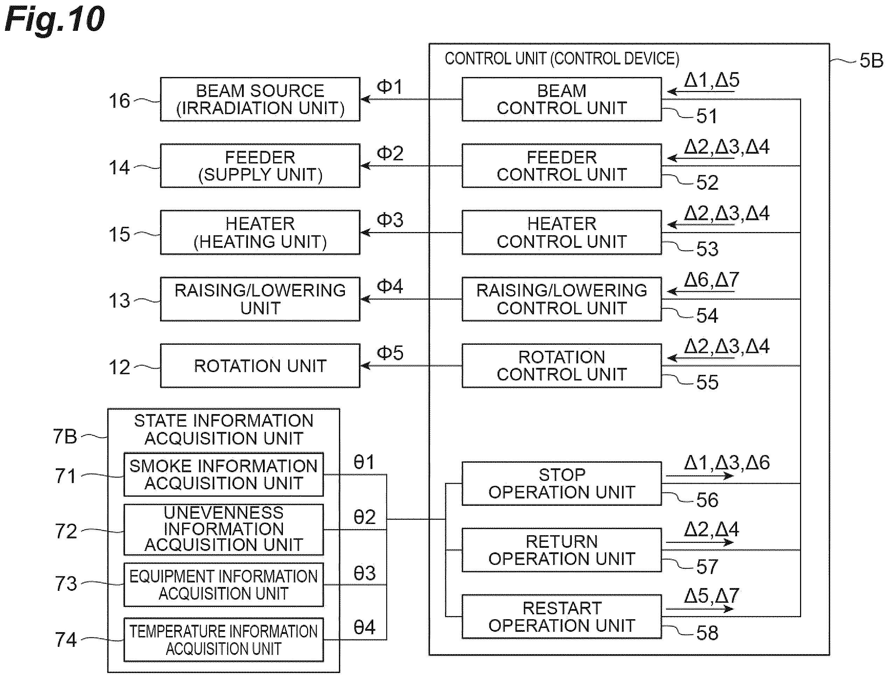

FIG. 10 is a block diagram showing a control unit (control device) 5B according to the third embodiment. The return operation unit 57 outputs the second control signal Δ2 corresponding to information indicated by the smoke information θ1 or the unevenness information Θ2.

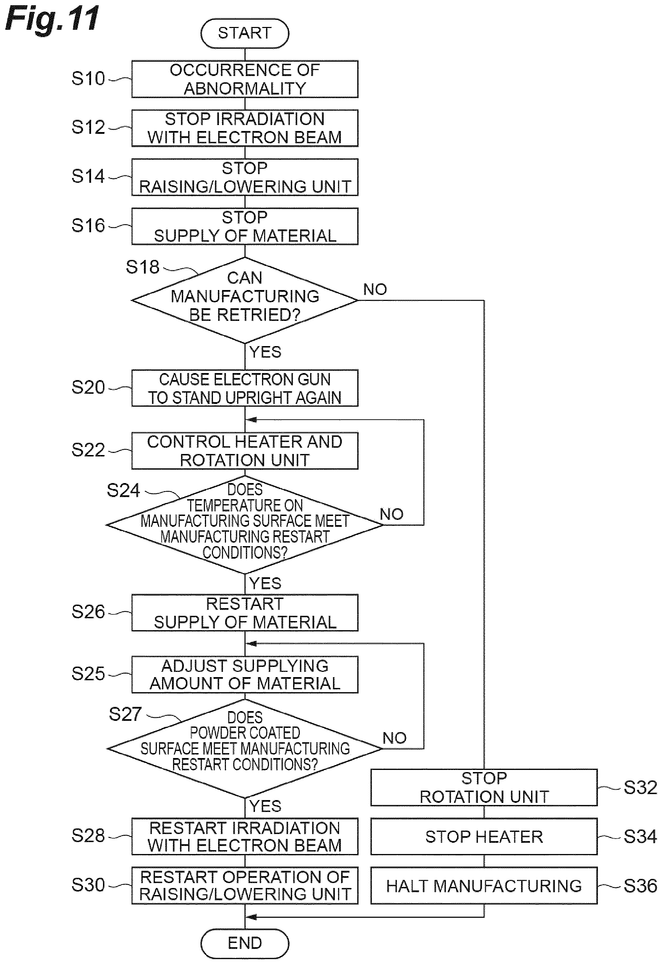

FIG. 11 is a flowchart showing an example of processing when an abnormality occurs in the rotating additive manufacturing device 1B according to the third embodiment. The rotating additive manufacturing device 1B according to the third embodiment adjusts at least one of the temperature on the manufacturing surface 10a and the roughness on the surface layer of the powder material 2. For example, the rotating additive manufacturing device 1B according to the third embodiment executes Steps S25 and S27 after Steps S22, S24, and S26. In FIG. 11, regarding the same steps as those in the processing flow of the rotating additive manufacturing device 1 or 1A according to the first embodiment or the second embodiment, description thereof will be omitted.

The control unit 5B determines whether or not manufacturing can be retried (Step S18). When the abnormal state information is the smoke information θ1 or the unevenness information θ2, the control unit 5B determines that manufacturing can be retried. When the abnormal state information is the obstacle information Θ3, the control unit 5B determines that manufacturing cannot be retried. When manufacturing can be retried (YES in Step S18), the processing proceeds to Step S20. When manufacturing cannot be retried (NO in Step S18), the processing proceeds to Step S32.

The control unit 5B controls heating operation of the heater 15 and rotating operation of the table 10 (Step S22). The control unit 5B outputs the rotation control signal φ5 to the rotation unit 12. The rotation unit 12 that has received the rotation control signal φ5 continues rotating operation of the table 10. The control unit 5B outputs the heating control signal φ3 to the heater 15. The heater 15 that has received the heating control signal φ3 continues heating operation of the heater 15.

The control unit 5B determines whether or not the temperature on the manufacturing surface meets the manufacturing restart conditions (Step S24). As an example, when the temperature information Θ4 is included in the manufacturing restart temperature range, the control unit 5B determines that it meets the manufacturing restart conditions. When the temperature information Θ4 is not included in the manufacturing restart temperature range, the control unit 5B determines that it does not meet the manufacturing restart conditions. When it meets the manufacturing restart conditions (YES in Step S24), the processing proceeds to Step S26. When it does not meet the manufacturing restart conditions (NO in Step S24), the processing returns to Step S22.

The control unit 5B restarts supply of the powder material 2 (Step S26). The control unit 5B outputs the supply control signal φ2 to the feeder 14. The feeder 14 that has received the supply control signal φ2 restarts supply of the powder material 2.

The control unit 5B adjusts the supplying amount of the powder material 2 (Step S25). The control unit 5B outputs the supply control signal φ2 to the feeder 14. The feeder 14 that has received the supply control signal φ2 adjusts the supplying amount of the powder material 2.

The control unit 5B determines whether or not the surface layer of the powder material 2 meets the manufacturing restart conditions (Step S27). As an example, when the unevenness information Θ2 is smaller than a thickness corresponding to one layer, the control unit 5B determines that it meets the manufacturing restart conditions. When the unevenness information Θ2 is equal to or larger than the thickness corresponding to one layer, the control unit 5B determines that it does not meet the manufacturing restart conditions. When it meets the manufacturing restart conditions (YES in Step S27), the processing proceeds to Step S28. When it does not meet the manufacturing restart conditions (NO in Step S27), the processing returns to Step S25.

The rotating additive manufacturing device 1B according to the third embodiment adjusts the temperature on the manufacturing surface 10a and the roughness on the surface layer of the powder material 2. Such a rotating additive manufacturing device 1B according to the third embodiment also exhibits operational effects similar to those of the rotating additive manufacturing device 1 or 1A according to the first embodiment or the second embodiment.

The present disclosure is not limited to the embodiments described above, and various modifications can be made as described below within a range not departing from the gist of the present disclosure.

In FIG. 4, an example in which the table 10 is rotated once during retrying of manufacturing has been described. The table 10 may be rotated any number of times until the manufacturing restart conditions are established. In the embodiments, the powder material 2 is heated using the heater 15 during retrying of manufacturing. An electron beam may be used as a heating source. In the embodiments, the temperature on the manufacturing surface 10a or the roughness on the surface layer of the powder material 2 is adopted as the manufacturing restart conditions. A heating time of the manufacturing surface 10a may be adopted as the manufacturing restart conditions.

### Reference Signs List

1 Rotating additive manufacturing device (three-dimensional manufacturing device)
2 Powder material
3 Manufacturing object
4 Drive unit
5 Control unit (control device)
6 Processing unit
7 State information acquisition unit
8 Housing
9 Column
10 Table
11 Manufacturing tank
10a Manufacturing surface
10b Rear surface
12 Rotation unit
13 Raising/lowering unit
14 Feeder (supply unit)
15 Heater (heating unit)
16 Beam source (irradiation unit)
51 Beam control unit
52 Feeder control unit
53 Heater control unit
54 Raising/lowering control unit
55 Rotation control unit
56 Stop operation unit
57 Return operation unit
58 Restart operation unit
71 Smoke information acquisition unit
72 Unevenness information acquisition unit
73 Equipment information acquisition unit
74 Temperature information acquisition unit
A1, A2, A3, A4 Division region
CW Rotation direction
S Manufacturing space
θ1 Smoke information
θ2 Unevenness information
θ3 Obstacle information
θ4 Temperature information
φ1 Irradiation control signal
φ2 Supply control signal
φ3 Heating control signal
φ4 Raising/lowering control signal
φ5 Rotation control signal
Δ1 First control signal
Δ2 Second control signal
Δ3 Third control signal
Δ4 Fourth control signal
Δ5 Fifth control signal
Δ6 Sixth control signal
Δ7 Seventh control signal

## Claims

1. A rotating additive manufacturing device comprising:
a table rotatively supporting a powder material;
a supply unit supplying the powder material to the table;
a heating unit heating the powder material disposed on the table;
an irradiation unit irradiating the powder material disposed on the table with an energy beam;
a state information acquisition unit outputting abnormal state information including information related to a state of the powder material disposed on the table and indicating a state where irradiation with the energy beam has to be stopped; and
a control unit controlling at least the irradiation unit on the basis of the abnormal state information,
wherein the control unit has
a stop operation unit outputting a first control signal for stopping irradiation with the energy beam due to an input of the abnormal state information, and
a return operation unit determining whether or not the abnormal state information is information related to the state of the powder material and outputting a second control signal for controlling at least one of rotating operation of the table, heating operation of the heating unit, and supplying operation of the supply unit when the abnormal state information is information related to the state of the powder material.

2. The rotating additive manufacturing device according to claim 1,
wherein the state information acquisition unit includes a smoke information acquisition unit outputting smoke information for judging the presence or absence of the powder material in a scattered state to the control unit as information related to the state of the powder material, and
wherein the return operation unit outputs a signal for controlling rotating operation of the table and heating operation of the heating unit as the second control signal when the smoke information constituting the abnormal state information received from the state information acquisition unit indicates generation of the smoke.

3. The rotating additive manufacturing device according to claim 1,
wherein the state information acquisition unit includes an unevenness information acquisition unit outputting unevenness information indicating a state of unevenness on a surface of the powder material irradiated with the energy beam to the control unit as information related to the state of the powder material, and
wherein the return operation unit outputs a signal for controlling rotating operation of the table and supplying operation of the supply unit as the second control signal when the unevenness information constituting the abnormal state information received from the state information acquisition unit does not satisfy predetermined conditions for unevenness.

4. The rotating additive manufacturing device according to any one of claims 1 to 3,
wherein the stop operation unit outputs a third control signal also for stopping rotating operation of the table, heating operation of the heating unit, and supplying operation of the supply unit due to an input of the abnormal state information, and
wherein the return operation unit outputs a fourth control signal for restarting at least one of rotating operation of the table, heating operation of the heating unit, and supplying operation of the supply unit when the abnormal state information is information related to the state of the powder material.

5. The rotating additive manufacturing device according to any one of claims 1 to 4,
wherein the control unit further has a restart operation unit outputting a fifth control signal for starting irradiation with the energy beam when the abnormal state information satisfies predetermined conditions.

6. A control device controlling a three-dimensional manufacturing device manufacturing a three-dimensional manufacturing object by heating a powder material supplied onto a rotating table from a supply unit using a heating unit and irradiating the powder material with an energy beam, the control device comprising:
a stop operation unit outputting a first control signal for stopping irradiation with the energy beam due to an input of abnormal state information including information related to a state of the powder material disposed on the table and indicating a state where irradiation with the energy beam has to be stopped; and
a return operation unit determining whether or not the abnormal state information is information related to the state of the powder material and outputting a second control signal for controlling at least one of rotating operation of the table, heating operation of the heating unit, and supplying operation of the supply unit when the abnormal state information is information related to the state of the powder material.
